# EUROPEAN PATENT APPLICATION

(11) **EP 4 242 742 A1**
(43) Date of publication of application: **13.09.2023**
(21) Application number: 21903688.6
(22) Date of filing: 23.11.2021
(51) Int. Cl.: G03B 5/00, G03B 13/32, G03B 17/12, H04N 5/225

(54) **CAMERA MODULE FOR SUPPORTING OPTICAL ZOOM, AND ELECTRONIC DEVICE COMPRISING SAME**

(30) Priority: 07.12.2020 KR 20200169625
(71) Applicant: Samsung Electronics Co., Ltd., Suwon-si, Gyeonggi-do 16677 (KR)
(72) Inventor: YU, Youngbok, Suwon-si Gyeonggi-do 16677 (KR); PARK, Dongyoul, Suwon-si Gyeonggi-do 16677 (KR); HWANG, Youngjae, Suwon-si Gyeonggi-do 16677 (KR); YU, Hyunho, Suwon-si Gyeonggi-do 16677 (KR); HUR, Dongsung, Suwon-si Gyeonggi-do 16677 (KR)
(74) Representative: Arnold & Siedsma
(86) International application number: PCT/KR2021/017233
(87) International publication number: WO 2022/124642

(57) **Abstract**

An electronic device according to one embodiment of the present document may comprise: a lens assembly arranged along a first optical axis; a driving magnet which is coupled to the lens assembly and which includes, at least twice, an N pole and an S pole alternately arranged along the first optical axis; a first coil and a second coil which face the driving magnet and which are arranged side by side along the first optical axis; and a control circuit electrically connected to the first coil and the second coil. The control circuit controls a first current applied to the first coil and a second current applied to the second coil, so as to control so that the lens assembly moves in the first optical axis direction with respect to the first coil and the second coil. Other various embodiments identified through the specification are possible.

## Description

### [Technical Field]

The disclosure relates to a camera module configured to support optical zoom, an electronic device including the same and an operation method of the electronic device.

### [Background Art]

Conventional mobile devices use a step zoom scheme in order to implement a zoom function. According to the step zoom scheme, multiple cameras having specific focal lengths, for example, three cameras having the focal length of 13mm, 26mm, and 52mm are mounted in a mobile device, and images corresponding to the specific focal lengths are acquired.

In addition, mobile devices use a ball bearing actuator to implement an auto focus (AF) function. A camera module using the ball bearing actuator may include a coil and a magnet, and the camera module may control the electric current applied to the coil so as to move the lens assembly along the optical axis.

Mobile devices are required to have a camera module mounted therein such that various technologies can be implemented, and are also required to have improved portability.

### [Disclosure of Invention]

### [Technical Problem]

When the step zoom scheme is used, in order to acquire an image corresponding to a focal length other than the specific focal lengths, a digital zoom image needs to be generated by combining multiple images corresponding to the specific focal lengths. The digital zoom image has a problem in that the resolution is degraded in comparison with an optical zoom image obtained by changing the focal length by moving the lens assembly.

The ball bearing actuator has a short stroke of about 1 mm. The lens assembly needs to be moved by about 10 mm or more in order to implement the optical zoom function, thereby posing a problem in that the stroke is too short to implement the optical zoom function by utilizing the existing actuator.

Various embodiments disclosed herein provide an actuator capable of implementing optical zoom without increasing the thickness of a mobile device, and a camera module including the same.

### [Solution to Problem]

An electronic device according to an embodiment of the document may include a lens assembly disposed along a first optical axis, a drive magnet which is coupled to the lens assembly and includes N-poles and S-poles alternately arranged along the first optical axis at least twice, a first coil and a second coil which face the drive magnet and are arranged side by side along the first optical axis, and a control circuit electrically connected to the first coil and the second coil. The control circuit may be configured to control a first current applied to the first coil and a second current applied to the second coil so that the lens assembly moves in the direction of the first optical axis with respect to the first coil and the second coil.

A method for operating an electronic device according to an embodiment of the document may include applying a first current to a first coil and applying a second current to a second coil by a control circuit included in the electronic device, the first coil and the second coil being arranged side by side along a first optical axis, and controlling such that a drive magnet including N-poles and S-poles, which face the first coil and the second coil and are alternately arranged along the first optical axis at least twice, moves in the direction of the first optical axis, and controlling such that a lens assembly coupled to the drive magnet and disposed along the first optical axis moves in the direction of the first optical axis, by the control circuit.

A camera module according to an embodiment of the document may include a lens assembly disposed along a first optical axis, a drive magnet which is coupled to the lens assembly and includes N-poles and S-poles alternately arranged along the first optical axis at least twice, and a first coil and a second coil which face the drive magnet and are arranged side by side along the first optical axis. The lens assembly may move along the first optical axis according to a current applied to the first coil and the second coil, and the distance between the N-poles of the drive magnet may have a designated ratio with respect to a distance between the center of the first coil and the center of the second coil.

### [Advantageous Effects of Invention]

According to various embodiments disclosed herein, an actuator having a stroke of about 10mm or more and a camera module including the actuator may be implemented. A mobile device including the camera module may acquire images through an optical zoom function. Optical zoom images may have continuous focal lengths in comparison with digital zoom images, and may not have degraded resolutions.

According to various embodiments disclosed herein, components and parts included in an actuator used to implement the conventional AF function may be used. Therefore, additionally necessary costs may be minimized while maintaining the level of control precision used for the AF function.

Advantageous effects obtainable from the disclosure are not limited to the above-mentioned advantageous effects, and other advantageous effects not mentioned herein will be clearly understood by those skilled in the art to which the disclosure pertains.

### [Brief Description of Drawings]

FIG. 1 illustrates an electronic device according to an embodiment.
FIG. 2 illustrates a cross section of an electronic device according to an embodiment.
FIG. 3 is a perspective view of a camera module included in an electronic device according to an embodiment.
FIG. 4 is an exploded perspective view of a camera module according to an embodiment.
FIG. 5 illustrates the arrangement of a lens assembly, a drive magnet, and a coil according to an embodiment.
FIG. 6 illustrates the movement of a drive magnet according to the control of a first coil or a second coil according to an embodiment.
FIG. 7 is a graph showing signal values detected by a first Hall sensor and a second Hall sensor according to an embodiment.
FIG. 8 illustrates the form of a first coil and a second coil according to an embodiment.
FIG. 9 illustrates a part of a camera module including a sensing magnet according to an embodiment.
FIG. 10 is a block diagram of an electronic device in a network environment according to various embodiments.
FIG. 11 is a block diagram showing a camera module according to an embodiment.

### [Mode for Carrying out the Invention]

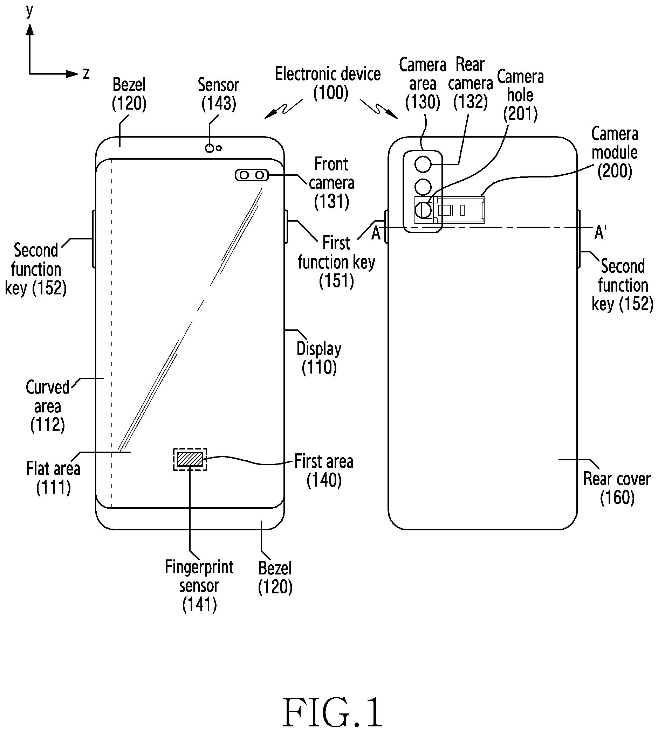

FIG. 1 illustrates an electronic device 100 according to an embodiment.

Referring to FIG. 1, a display 110 may be disposed on the front surface of an electronic device 100 according to an embodiment. In an embodiment, the display 110 may be configured to occupy most of the front surface of the electronic device 100. The display 110 and the area of a bezel 120 surrounding at least a part of the edge of the display 110 may be arranged on the front surface of the electronic device 100. In the example of FIG. 1, the display 110 may include a flat area 111 and a curved area 112 extending from the flat area 111 toward a side surface of the electronic device 100. Although the curved area 112 is illustrated only on one side (e.g., the left side) thereof in FIG. 1, it may be understood that the curved area is identically formed at the side opposite thereto. In addition, the electronic device 100 illustrated in FIG. 1 may be an example, and various embodiments may be possible. For example, the display 110 of the electronic device 100 may include only the flat area 111 without the curved area 112, or may be provided with the curved area 112 only at one side rather than both sides of the edge. In addition, in an embodiment, a curved area may extend to the rear surface of the electronic device 100, and the electronic device 100 may also be provided with an additional flat area.

In an embodiment, a fingerprint sensor 141 for recognizing a user fingerprint may be included in a first area 140 of the display 110. The fingerprint sensor 141 may be disposed on a lower layer of the display 110 not to be recognized or to be difficult recognized by a user. In addition, a sensor for additional user/biometric authentication may be disposed in a partial area of the display 110 in addition to the fingerprint sensor 141. In another embodiment, a sensor for user/biometric authentication may be disposed in an area of the bezel 120. For example, an infrared (IR) sensor for iris authentication may be exposed through an area of the display 110 or through an area of the bezel 120.

In an embodiment, a sensor 143 may be included in at least an area of the bezel 120 or at least an area of the display 110 of the electronic device 100. The sensor 143 may be a sensor for detecting a distance and/or a sensor for detecting an object. For example, the sensor 143 may operate as at least a part of an IR camera (e.g., a time of flight (TOF) camera or a structured light camera), or may operate as at least a part of a sensor module.

In an embodiment, a front camera 131 may be disposed on the front surface of the electronic device 100. Although it is illustrated in the embodiment of FIG. 1 that the front camera 131 is exposed through an area of the display 110, in another embodiment, the front camera 131 may be exposed through the bezel 120.

In an embodiment, the display 110 may include at least one of a sensor module, a camera module (e.g., the front camera 131), and a light-emitting element (e.g., an LED) on the rear surface of a screen display area (e.g., the flat area 111 and the curved area 112).

In an embodiment, a camera module (not shown) may be disposed on the rear surface of at least one of the front surface and the side surfaces of the electronic device 100 to be directed towards the front surface and/or the side surfaces. For example, the front camera 131 may not be visually exposed to a screen display area (e.g., the flat area 111 and the curved area 112), and may include a hidden display rear camera (an under display camera (UDC)). In an embodiment, the electronic device 100 may include one or more front cameras 131. For example, the electronic device 100 may include two front cameras of a first front camera and a second front camera. In an embodiment, the first front camera and the second front camera may be cameras of the same type having the same specification (e.g., pixel), but the first front camera and the second front camera may be implemented as cameras having different specifications. The electronic device 100 may support functions (e.g., 3D photographing function or an AF function) related to a dual camera through the two front cameras.

In an embodiment, a rear camera 132 may be disposed on the rear surface of the electronic device 100. A part of the rear camera 132 may be exposed through a camera area 130 of the rear cover 160. The rear camera 132 may include a camera module 200. The camera module 200 may be disposed on the rear surface of the rear cover 160 so as to face the rear surface.

According to an embodiment, a camera hole 201 may be positioned in the camera area 130. The camera module 200 may obtain an image corresponding to light incident through the camera hole 201. A surface, in which the camera hole 201 of the electronic device 100 is disposed, may be referred to as the rear surface of the electronic device 100.

In an embodiment, at least a partial area (e.g., the camera area 130) of the rear surface of the electronic device 100, which includes the camera hole 201, may protrude more than the remaining areas of the rear surface of the electronic device 100. For example, the camera area 130 may protrude compared to the remaining areas of the rear cover 160. In another embodiment, the rear surface of the electronic device 100, which includes the camera hole 201, may form an even flat-surface without a protruding portion. For example, the camera area 130 may not protrude more than the remaining areas of the rear cover 160.

In an embodiment, the electronic device 100 may include multiple rear cameras 132 arranged in the camera area 130. For example, the electronic device 100 may include two or more rear cameras 132. For example, the electronic device 100 may include a first rear camera, a second rear camera, and a third rear camera. The first rear camera, the second rear camera, and the third rear camera may have different specifications. For example, field of views (FOV), pixels, apertures of the first rear camera, the second rear camera, and/or the third rear camera, whether the first rear camera, the second rear camera, and/or the third rear camera supports an optical image stabilization (OIS) (or image shaking correction) function, the type and/or arrangement of lens sets included in each of the cameras, and the like, may be different. In embodiments of the document, descriptions related to the function or the characteristic of the front camera 131 may be applied to the rear camera 132, and vice versa.

In an embodiment, in case that the electronic device 100 includes multiple rear cameras 132, at least one rear camera 132 of the multiple rear cameras 132 may include the camera module 200.

In an embodiment, the length in the z-axis direction of the camera module 200 included in the rear camera 132 of the electronic device 100 may be longer than the length in the y-axis direction. For example, the camera module 200 may have a long shape in the horizontal direction (e.g., the z-axis direction) of the electronic device 100. In another embodiment, the camera module 200 may also have a long shape in the vertical direction (e.g., the y-axis direction), which is rotated by about 90 degrees with reference to the x-axis of the camera module 200 illustrated in FIG. 1.

In an embodiment, various hardware or sensors for assisting photographing, such as a flash, may be additionally arranged in the camera area 130. For example, various sensors such as a distance sensor for detecting a distance between a subject and the electronic device 100 may be further included therein. For example, the distance sensor may operate as at least a part of an IR camera (e.g., a TOF camera or a structured light camera) or may operate as at least a part of a sensor module. For example, the TOF camera may operate as at least a part of a sensor module for detecting a distance to a subject.

In an embodiment, at least one physical key may be disposed on a side surface part of the electronic device 100. For example, a first function key 151 for turning ON/OFF the display 110 or turning ON/OFF the power of the electronic device 100 may be disposed on the right edge with reference to the front surface of the electronic device 100. In an embodiment, a second function key 152 for controlling the volume of the electronic device 100 or the brightness of a screen may be disposed on the left edge with reference to the front surface of the electronic device 100. In addition thereto, additional buttons or keys may be arranged on the front surface or the rear surface of the electronic device 100. For example, a physical button or touch button mapped to a specific function may be disposed in the bottom area of the bezel 120 of the front surface.

The electronic device 100 illustrated in FIG. 1 may be merely an example, and does not limit the type of device to which the technical concept disclosed in the document is applied. For example, although the electronic device 100 of the illustrated example shows the exterior of a bar type or plate type electronic device, various embodiments of the document are not limited thereto. For example, the illustrated electronic device 100 may be a part of a rollable electronic device. A rollable electronic device may have the display 110 which can be bending-deformed, and thus may be understood as an electronic device of which at least a portion is wound or rolled, or is accommodated in the inside the electronic device 100. According to user needs, the rollable electronic device may be configured such the display 110 is unfolded or a larger area of the display 110 is exposed to the outside, and thus the screen display area (e.g., the flat area 111 and the curved area 112) thereof may be expanded and used. The display 110 may also be referred to as a slide-out display or an expandable display.

Hereinafter, for the convenience of explanation, various embodiments will be described based on the electronic device 100 illustrated in FIG. 1.

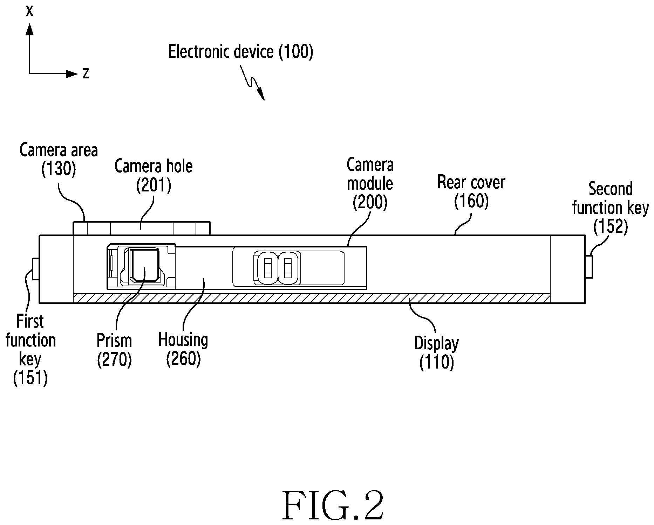

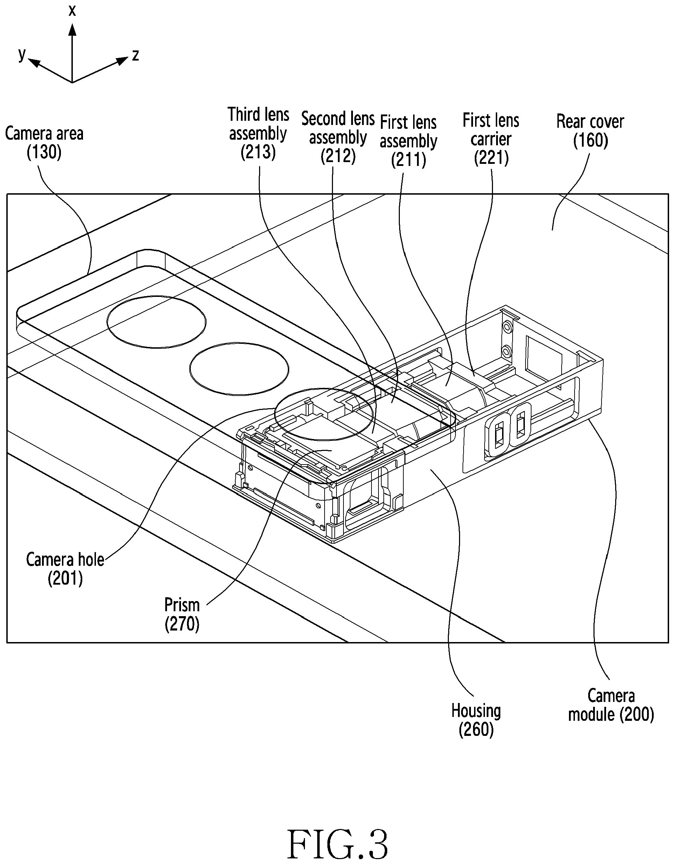

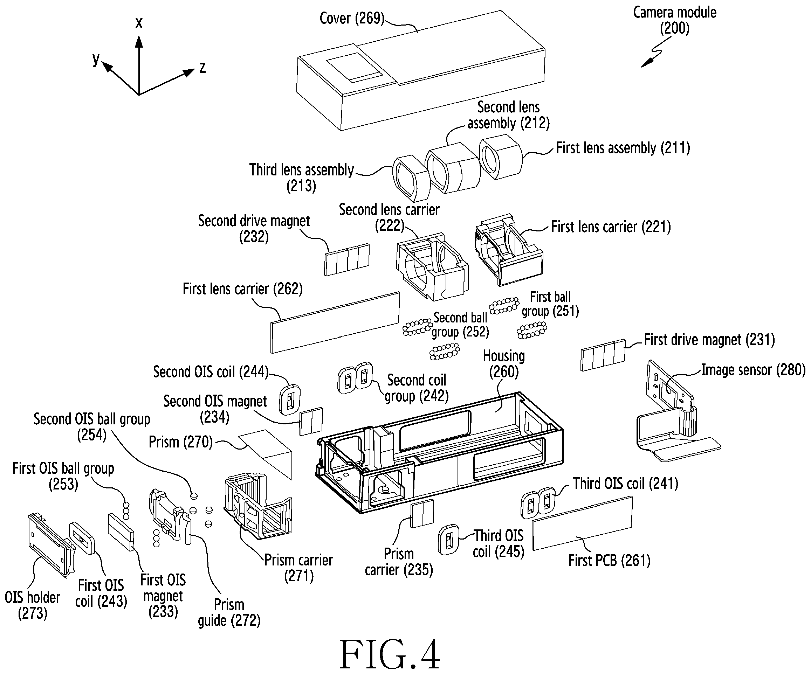

FIG. 2 illustrates a cross section of an electronic device 100 according to an embodiment. FIG. 3 is a perspective view of a camera module 200 included in an electronic device 100 according to an embodiment. FIG. 4 is an exploded perspective view of a camera module 200 according to an embodiment.

FIG. 2 is a view schematically showing the shape when the cross section of an electronic device 100 cut along line A-A' illustrated in FIG. 1 is seen in the +y-axis direction. FIG. 3 illustrates a camera module 200 included in the electronic device 100 illustrated in FIG. 1 and FIG. 2. FIG. 4 illustrates exposed configurations of the camera module 200 illustrated in FIG. 3.

Referring to FIG. 2, the electronic device 100 may include the camera module 200. The camera module 200 may include a housing 260 and a prism 270. The camera module 200 may have a shape in which the length in the z-axis direction is longer than the length in the x-axis direction. The light incident to the camera module 200 along a second optical axis (e.g., the -x-axis direction) may be reflected by prism 270, and then may travel along a first optical axis (e.g., the +z-axis direction).

According to an embodiment, the camera area 130 may protrude more than the remaining areas of the rear cover 160 on the rear surface of the electronic device 100. In another embodiment, the camera area 130 may not protrude, and the rear surface of the electronic device 100 may be formed as an even flat-surface without a protruding portion.

Referring to FIG. 3, the camera module 200 may include at least one lens assembly of a first lens assembly 211 and a second lens assembly 212 installed to be movable relative to the housing 260. In an embodiment, the camera module 200 may further include a third lens assembly 213 fixed to the housing 260.

According to an embodiment, each of the first lens assembly 211, the second lens assembly 212, and the third lens assembly 213 may include multiple lenses aligned along the first optical axis (e.g., the z-axis direction). The number of lenses and the characteristics (e.g., the magnifications) of the lenses included in each of the lens assemblies may be different. In another embodiment, at least one lens assembly of the first lens assembly 211, the second lens assembly 212, and the third lens assembly 213 may include one lens.

According to an embodiment, the first lens assembly 211 may be installed in the housing 260 through a first lens carrier 221. The first lens carrier 221 may be configured to accommodate the first lens assembly 211. The first lens assembly 211 may be coupled to the first lens carrier 221, and may move integrally with the first lens carrier 221. For example, the first lens carrier 221 for accommodating the first lens assembly 211 may move in the +z-axis direction and/or the -z-axis direction with respect to the housing 260. In an embodiment, the first lens assembly 211 and the first lens carrier 221 may be integrally formed. The configuration above described may also be applied to the second lens assembly 212 in the same way.

According to an embodiment, the third lens assembly 213 may be installed in the housing 260. The third lens assembly 213 may be fixed to the housing 260, and may be disposed so as not to be movable relative to the housing 260. In another embodiment, the third lens assembly 213 may be installed in the housing 260 through a third lens carrier (not shown), and the third lens carrier may move in the +z-axis direction and/or the -z-axis direction with respect to the housing 260.

According to an embodiment, the camera module 200 may include the prism 270. The prism 270 may be positioned in front of the third lens assembly 213. The prism 270 may change and reflect light incident along the second optical axis (e.g., the -x-axis direction) by about 90 degrees so that the light travels along the first optical axis (e.g., the +z-axis direction). The light, which is incident to the prism 270 along the second optical axis (e.g., the -x-axis direction) through the camera hole 201 of the electronic device 100, may be reflected by the prism 270, and may be incident to the third lens assembly 213 along the first optical axis (e.g., the +z-axis direction).

According to an embodiment, the light reflected by the prism 270 may travel from the front side (e.g., the -z-axis direction) of the third lens assembly 213 to the rear side (e.g., the +z-axis direction) of the first lens assembly 211. The light, which is incident from the front side of the third lens assembly 213 to the foremost lens (e.g., the lens which at least partially faces the prism 270) of the third lens assembly 213, may travel to the rear side (e.g., to an image sensor) of the first lens assembly 211 through the multiple lenses of the third lens assembly 213, the second lens assembly 212, and the first lens assembly 211.

Referring to FIG. 4, the camera module 200 may include the housing 260 and a cover 269 for covering at least a part of the housing 260.

According to an embodiment, the camera module 200 may include a configuration for implementing the OIS function thereof. In an embodiment, the camera module 200 may include a first OIS coil 243, a second OIS coil 244, a third OIS coil 245, a first OIS magnet 233, a second OIS magnet 234, a third OIS magnet 235, and an OIS holder 273 which adjust the angle of the prism 270 to implement the OIS function thereof. The first OIS coil 243 may be fixed to the OIS holder 273, and the OIS holder 273 may be coupled to the housing 260. The second OIS coil 244 and the third OIS coil 245 may be fixed to the housing 260. The first OIS magnet 233, the second OIS magnet 234, and the third OIS magnet 235 may be fixed to the prism 270 or a prism carrier 271, and thus may move integrally with the prism 270. The camera module 200 may include a prism guide 272 for guiding motion (e.g., rotation) of the prism 270.

According to an embodiment, the camera module 200 may include a control circuit electrically connected to the first OIS coil 243, the second OIS coil 244, and the third OIS coil 245, and the control circuit may control a current applied to at least one of the first OIS coil 243, the second OIS coil 244, and the third OIS coil 245, in order to implement the OIS function of the camera module 200. For example, the control circuit may control a current applied to the first OIS coil 243 so as to control the movement (e.g., the rotation around the y-axis) of the prism 270. In case that a current is applied to the first OIS coil 243, the prism 270 may move through an interaction between the first OIS coil 243 and the first OIS magnet 233. For another example, the control circuit may control the current applied to at least one coil of the second OIS coil 244 and the third OIS coil 245 so as to control the movement (e.g., the rotation around the x-axis) of the prism 270. In case that a current is applied to the second OIS coil 244 and/or the third OIS coil 245, the prism 270 may move through an interaction between the second OIS coil 244 and the second OIS magnet 234 and/or an interaction between the third OIS coil 245 and the third OIS magnet 235.

According to an embodiment, the camera module 200 may include a first OIS ball group 253 including at least one ball in a gap between the prism guide 272 and the OIS holder 273, and a second OIS ball group 254 including at least one ball in a gap between the prism carrier 271 and the prism guide 272. The camera module 200 may smooth the motion (e.g., rotation) of the prism 270 through the first OIS ball group 253 and the second OIS ball group 254. For example, the first OIS ball group 253 may reduce the frictional force generated when the prism 270 rotates around the y-axis, and the second OIS ball group 254 may reduce the frictional force generated when the prism 270 rotates around the x-axis.

According to an embodiment, the OIS holder 273 and the prism guide 272 may include at least one guide groove for accommodating at least a part of the first OIS ball group 253. By the first OIS ball group 253 moving along the guide groove, the prism 270 may rotate around the y-axis.

According to an embodiment, the prism guide 272 and the prism carrier 271 may include at least one guide groove for accommodating at least a part of the second OIS ball group 254. By the second OIS ball group 254 moving along the guide groove, the prism 270 may rotate around the x-axis.

According to an embodiment, the camera module 200 may include a configuration for performing an AF function and/or an optical zoom function for light reflected in the first optical axis (e.g., the +z-axis direction) by the prism 270. In an embodiment, the camera module 200 may include at least one lens assembly of the third lens assembly 213 fixed to the housing 260, the second lens assembly 212 installed through a second lens carrier 222 to be movable in the +z-axis direction and/or the -z-axis direction with respect to the housing 260, and the first lens assembly 211 installed through the first lens carrier 221 to be movable in the +z-axis direction and/or the -z-axis direction with respect to the housing 260. The camera module 200, in order to support the AF function and/or the optical zoom function, may include a first drive magnet 231 fixed to the first lens carrier 221, a first coil group 241 fixed to the housing 260, and a first ball group 251 including at least one ball in a gap between the first lens carrier 221 and the housing 260, and may include a second drive magnet 232 fixed to the second lens carrier 222, a second coil group 242 fixed to the housing 260, and a second ball group 252 including at least one ball in a gap between the second lens carrier 222 and the housing 260. The camera module 200 may include a first PCB 261 for controlling the movement of the first lens assembly 211, and a second PCB 262 for controlling the movement of the second lens assembly 212.

According to an embodiment, the first drive magnet 231 may be coupled to the surface of the first lens carrier 221, which is positioned in the -y-axis direction, and the first coil group 241 may be coupled to one surface of the housing 260, which faces the first drive magnet 231. According to an embodiment, the second drive magnet 232 may be coupled to the surface of the second lens carrier 222, which is positioned in the +y-axis direction, and the second coil group 242 may be coupled to one surface of the housing 260, which faces the second drive magnet 232.

According to an embodiment, the first coil group 241 may include at least two coils, the second coil group 242 may include at least two coils, and the camera module 200 may include a control circuit electrically connected to each of coils included in the first coil group 241 and the second coil group 242. The control circuit may control a current applied to at least one coil of coils included in the first coil group 241 and coils included in the second coil group 242, in order to implement the AF function and/or the optical zoom function of the camera module 200. For example, the control circuit may control a current applied to at least one coil of coils included in the first coil group 241 so as to control the movement (e.g., the movement in the +z-axis direction or the -z-axis direction) of the first lens assembly 211. In case that a current is applied to at least one coil of coils included in the first coil group 241, the first lens assembly 211 may move through an interaction between the coil to which a current is applied and the first drive magnet 231. For another example, the control circuit may control a current applied to at least one coil of coils included in the second coil group 241 so as to control the movement (e.g., the movement in the +z-axis direction or the -z-axis direction) of the second lens assembly 212. In case that a current is applied to at least one coil of coils included in the second coil group 242, the second lens assembly 212 may move through an interaction between the coil to which a current is applied and the second drive magnet 232.

According to an embodiment, the first coil group 241 and the second coil group 242 may include at least one Hall sensor surrounded by each of coils thereof. For example, the first coil group 241 may include two coils, and may include two Hall sensors surrounded by the two coils, respectively. In an embodiment, the Hall sensors may be fixed to the housing 260 so as to detect the positions of drive magnets (e.g., the first drive magnet 231 and the second drive magnet 232), respectively. The control circuit, which is electrically connected to at least one Hall sensor included in the first coil group 241 and second coil group 242, may provide power to each of at least one coil and at least one Hall sensor included in the first coil group 241 or the second coil group 242. The control circuit may detect the positions of drive magnets (e.g., the first drive magnet 231 and the second drive magnet 232) through Hall sensors, respectively.

According to an embodiment, the camera module 200 may include other sensors for identifying the movement (rotation) (e.g., the positions of the x-axis, the y-axis, and the z-axis direction) of at least one magnetic body (e.g., the first OIS magnet 233, the second OIS magnet 234, the third OIS magnet 235, the first drive magnet 231, or the second drive magnet 232). For example, the camera module 200 may include a tunnel magneto-resistance (TMR) sensor, and may identify the movement (rotation) of a magnetic body by using a resistance value which is changed based on the relative angles between multiple magnetic bodies of the TMR sensor. In addition, according to another embodiment, the camera module 200 may identify the movement (rotation) of a magnetic body by using an anisotropic magneto-resistance (AMR) sensor or a giant magneto-resistance (GMR) sensor.

According to an embodiment, the control circuit may be disposed on the first PCB 261 or the second PCB 262. For example, a first control circuit for controlling the first coil group 241 may be included in the first PCB 261, and a second control circuit for controlling the second coil group 242 may be included in the second PCB 262. For another example, the control circuit may be disposed on any one of the first PCB 261 and the second PCB 262 so as to control both the first coil group 241 and the second coil group 242. For example, the camera module 200 may control the direction and/or intensity of a current passing through at least one coil so as to control an electromagnetic force, under the control of the control circuit, and may move a lens assembly (e.g., the first lens assembly 211, the second lens assembly 212, or the third lens assembly 213) by using the Lorentz force which is an electromagnetic force (an electromagnetic induction method).

According to an embodiment, the camera module 200 may include a first ball group 251 including at least one ball in a gap between the housing 260 and the first lens carrier 221, and may include a second ball group 252 including at least one ball in a gap between the housing 260 and the second lens carrier 222. The housing 260 and the first lens carrier 221 may include at least one guide groove extending along the first optical axis (e.g., the -z-axis direction or the +z-axis direction) so as to accommodate at least a part of the first ball group 251, and the housing 260 and the second lens carrier 222 may include at least one guide groove extending along the first optical axis (e.g., the -z-axis direction or the +z-axis direction) so as to accommodate at least a part of the second ball group 252. The first ball group 251 may reduce the friction force between the housing 260 and the first lens carrier 221 while rotating therebetween so as to smoothly move the first lens carrier 221 in the z-axis direction, and the second ball group 252 may reduce the friction force between the housing 260 and the second lens carrier 222 while rotating therebetween so as to smoothly move the second lens carrier 222 in the z-axis direction.

According to an embodiment, coils (e.g., the first OIS coil 243, the second OIS coil 244, the third OIS coil 245, the first coil group 241, or the second coil group 242) and magnets (e.g., the first OIS magnet 233, the second OIS magnet 234, the third OIS magnet 235, the first drive magnet 231, or the second drive magnet 232) of the camera module 200 are not necessarily limited to the arrangement illustrated in the drawings. In various embodiments, the first OIS coil 243 and the second OIS coil 244 (and/or the third OIS coil 245) may be arranged to face each other. For example, any one of the first OIS coil 243 and the second OIS coil 244 (and/or the third OIS coil 245) may be driven as the solenoid type together with a corresponding magnet, and the other thereof may be configured to be driven as the Lorentz type. For example, the first OIS coil 243 and the second OIS coil 244 (and/or the third OIS coil 245) may be arranged to face each other so as to drive lens carriers (e.g., the first lens carrier 221, the second lens carrier 222, or the prism carrier 271) in two directions substantially perpendicular to each other.

According to an embodiment, the camera module 200 may include an image sensor 280. An optical signal, which is incident along the second optical axis (e.g., the -x-axis direction) through the camera hole 201 and then passes through the third lens assembly 213, the second lens assembly 212, and the first lens assembly 211 along the first optical axis (e.g., the +z-axis direction) by the prism 270, may be converted into an electrical signal by the image sensor 280. At least one processor (e.g., an image signal processor (ISP) or an application processor (AP)) connected to the image sensor 280 may obtain image data corresponding to the optical signal through the image sensor 280. In an embodiment, the control circuit may be understood as a concept including the at least one processor.

According to an embodiment, the electronic device 100 may include a processor (not shown). The processor may include at least one processor of an image signal processor (ISP) and an application processor (AP). The processor may be electrically connected to the control circuit included in the camera module 200. The control circuit may provide image data obtained through the image sensor 280 to the processor. The processor may control the movement of at least one lens assembly of the first lens assembly 211 and the second lens assembly 212 through the control circuit, and thus may implement an optical zoom function. As another example, a processor for obtaining image data through the image sensor 280 and a control circuit for controlling a lens may be implemented as separate hardware.

According to an embodiment, the electronic device 100 may combine an optical zoom function and a digital zoom function to process image data. For example, the electronic device 100 may provide a three-times zoom by combining a 1.08-times optical zoom with digital zoom and crop, or may provide a 10-times zoom by combining a four-times optical zoom with digital zoom and crop.

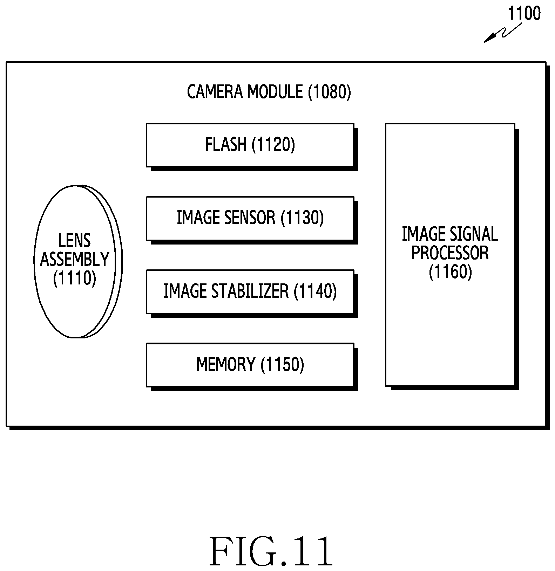

In an embodiment, an image signal processor (ISP) (e.g., the image signal processor 1160 in FIG. 11) may perform a stabilization process for images obtained from the camera module 200. In an embodiment, the stabilization process may include at least one of auto exposure (AE), auto focus (AF), and auto white balance (AWB). In another embodiment, the image signal processor (ISP) may improve the quality of an image obtained from the camera module 200 through a picture quality (e.g., resolution) adjustment/tuning process.

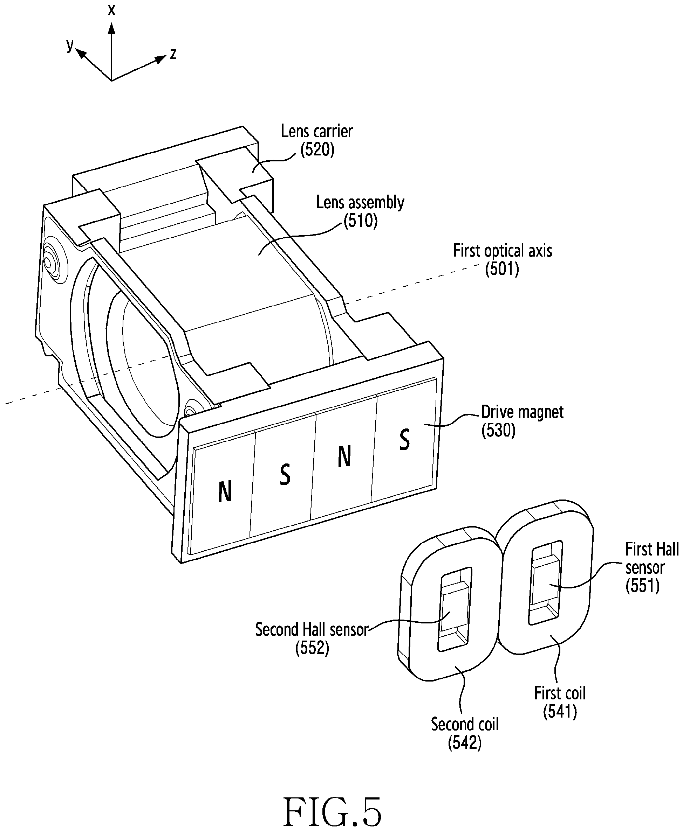

FIG. 5 illustrates the arrangement of a lens assembly 510, a drive magnet 530, and coils 541 and 542 according to an embodiment. The configuration illustrated in FIG. 5 may be understood as a part of configurations of the camera module 200 illustrated in FIG. 1 to FIG. 4.

According to an embodiment, the camera module 200 may include a lens assembly 510 arranged along a first optical axis 501, a drive magnet 530 which is coupled to the lens assembly 510 and includes N-poles and S-poles alternately arranged along the first optical axis 501 at least twice, and a first coil 541 and a second coil 542 which face the drive magnet 530 and are arranged side by side along the first optical axis 501. In an embodiment, the camera module 200 may include a first Hall sensor 551 surrounded by the first coil 541 and a second Hall sensor 552 surrounded by the second coil 542. In an embodiment, the camera module 200 may include a lens carrier 520 coupled to the lens assembly 510 and the drive magnet 530, and thus may be movable integrally therewith.

According to an embodiment, the lens assembly 510 may be understood as the first lens assembly 211 or the second lens assembly 212 illustrated in FIG. 4. The lens carrier 520 may be understood as the first lens carrier 221 or the second lens carrier 222 illustrated in FIG. 4. The drive magnet 530 may be understood as the first drive magnet 231 or the second drive magnet 232 illustrated in FIG. 4. The first coil 541, the second coil 542, the first Hall sensor 551, and the second Hall sensor 552 may be understood to be included in the first coil group 241 or included in the second coil group 242.

According to an embodiment, the lens assembly 510 may include at least one lens, and the at least one lens may be disposed along the first optical axis 501. In an embodiment, the first optical axis 501 may be understood as the z-axis.

According to an embodiment, the lens carrier 520 may accommodate the lens assembly 510, and the lens assembly 510 may be installed in the housing 260 through the lens carrier 520. The lens assembly 510 may be coupled to the lens carrier 520 and may move integrally with the lens carrier 520. The lens carrier 520 for accommodating the lens assembly 510 may move along the first optical axis 501 (e.g., the +z-axis direction or the -z-axis direction) relative to the housing 260. In an embodiment, the lens assembly 510 and the lens carrier 520 may be integrally formed.

According to an embodiment, the drive magnet 530 may be fixed to the lens carrier 520 and may move integrally with the lens assembly 510. For example, the drive magnet 530 may be disposed on one surface (e.g., in the +y-axis direction or the -y-axis direction) of the lens carrier 520 for accommodating the lens assembly 510. In an embodiment, a yoke may be further included between the lens carrier 520 and the drive magnet 530. For example, the yoke may shield a magnetic field so that the magnetic field caused by a magnet (e.g., the first OIS magnet 233, the second OIS magnet 234, the third OIS magnet 235, the first drive magnet 231, or the second drive magnet 232) does not influence electrical elements (e.g., the first PCB 261, the second PCB 262, or the image sensor 280 in FIG. 4) arranged inside the camera module 200.

According to an embodiment, the drive magnet 530 may be a magnet in which N-poles and S-poles are alternately arranged along the first optical axis 501 (e.g., the z-axis) at least twice. According to an embodiment, the drive magnet 530 may include one magnet in which N-poles and two S-poles are alternately arranged along the first optical axis 501 at least twice. In another embodiment, the drive magnet 530 may be a magnet group in which two or more magnets, each of which has an N-pole and an S-pole arranged once, are continuously arranged. In another embodiment, the drive magnet 530 may be a magnet group in which magnets, each of which has an N-pole and an S-pole arranged once, are arranged at positions spaced apart from each other by a predetermined distance or more. In an embodiment, the drive magnet 530 may be a magnet in which N-poles and S-poles are alternately arranged along the first optical axis three or more times.

According to an embodiment, the first coil 541 and the second coil 542 may be fixed to the housing 260, may be arranged to face the drive magnet 530, and may be arranged side by side along the first optical axis 501. For example, in case that the drive magnet 530 is positioned in the - y-axis direction of the lens assembly 510, the first coil 541 and the second coil 542 may face the drive magnet 530 in the -y-axis direction of the drive magnet 530. For another example, in case that the drive magnet 530 is positioned in the +y-axis direction of the lens assembly 510, the first coil 541 and the second coil 542 may face the drive magnet 530 in the +y-axis direction of the drive magnet 530. In an embodiment, the camera module 200 may further include a third coil (not shown) and a fourth coil (not shown) arranged side by side along the first coil 541 and the second coil 542 and the first optical axis 501.

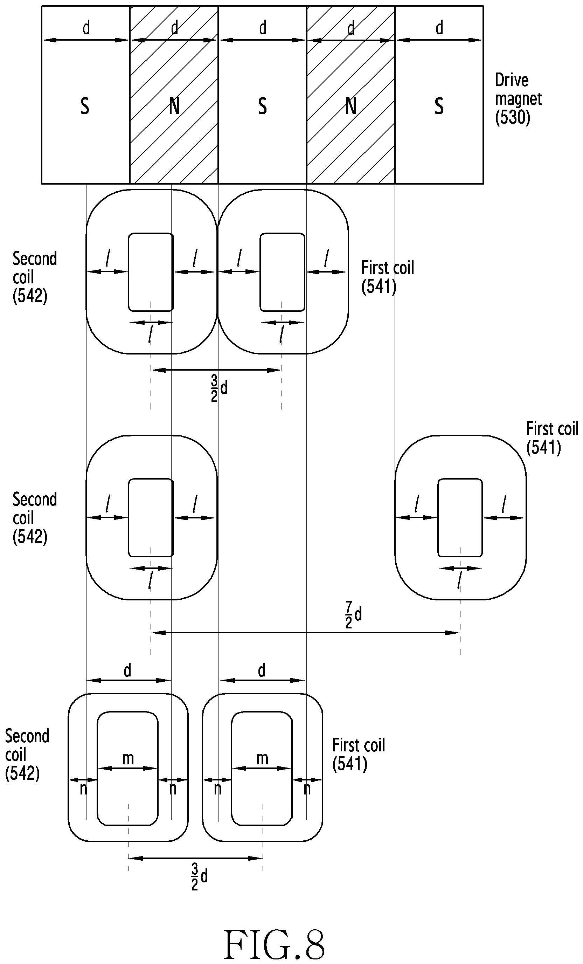

According to an embodiment, the first coil 541 and the second coil 542 may be arranged to be in close contact with each other. For example, the distance between the N-poles of the drive magnet 530 may have a ratio of 4/3 with respect to a distance between the center of the first coil 541 and the center of the second coil 542. In another embodiment, the first coil 541 and the second coil 542 may be arranged in a form in which the first coil and the second coil are spaced apart from each other by a predetermined distance. For example, the distance between the N-poles of the drive magnet 530 may have a ratio of 4/7 or 4/11 with respect to a distance between the center of the first coil 541 and the center of the second coil 542. Details thereof will be described later with reference to FIG. 8.

According to an embodiment, the width of a coil inner hole and the coil winding width of each of the first coil 541 and/or the second coil 542 may have a ratio of 1 : 1. According to an embodiment, the width of a coil inner hole and the coil winding width of each of the first coil 541 and/or the second coil 542 may not be identical to each other. Details thereof will be described later with reference to FIG. 8.

According to an embodiment, the camera module 200 may include a control circuit electrically connected to the first coil 541 and the second coil 542. The control circuit may control a first current applied to the first coil 541 and a second current applied to the second coil 542 so that the lens assembly 510 moves in the direction of the first optical axis 501 relative to the first coil 541 and the second coil 542. For example, the control circuit may control the first current and the second current so that the lens carrier 520 coupled to the lens assembly 510 and the drive magnet 530 moves in the +z-axis direction or -z-axis direction with respect to the housing 260.

According to an embodiment, the first Hall sensor 551 may be fixed to the housing 260 in a state of being surrounded by the first coil 541, and the second Hall sensor 552 may be fixed to the housing 260 in a state of being surrounded by the second coil 542. The control circuit may be electrically connected to the first Hall sensor 551 and the second Hall sensor 552, and the control circuit may detect the position of the drive magnet 530 through the first Hall sensor 551 and the second Hall sensor 552. The control circuit may determine whether the lens assembly 510 has been moved to a desired position, through a position value of the drive magnet 530. For example, in case that it is determined that the lens assembly 510 should be moved to a specific position, the control circuit may control the first current applied to the first coil 541, and may control the movement of the lens assembly 510 through an interaction between the first coil 541 and the drive magnet 530. The control circuit may obtain a position value of the drive magnet 530 through the first Hall sensor 551, and may determine whether the lens assembly 510 has been moved to a specific position at which the lens assembly should be moved. In case that the lens assembly 510 has not moved to a corresponding position, the control circuit may again control the first current applied to the first coil 541 to an appropriate value.

Referring to FIG. 2 to. FIG. 5, the first coil 541 and the second coil 542 may be arranged side by side along the first optical axis 501 in the z-axis direction. In case that the first coil 541 and the second coil 542 are arranged side by side in the z-axis direction (e.g., in case that the positions in the y-axis direction of the first coil 541 and the second coil 542 are the same, and the positions in the x-axis direction of the first coil 541 and the second coil 542 are the same compared to other cases), the length in the x-axis direction of the camera module 200 may be reduced. In case that the first coil 541 and the second coil 542 are arranged side by side along the z-axis direction, the length (e.g., the thickness of the electronic device 100) in the x-axis direction of the electronic device 100 may also be reduced.

According to an embodiment, the camera module 200 of the disclosure may use existing configurations and components included in an actuator used in order to implement an AF function. Therefore, it may be possible to minimize the additional required cost while maintaining a control precision of the degree used for an AF function.

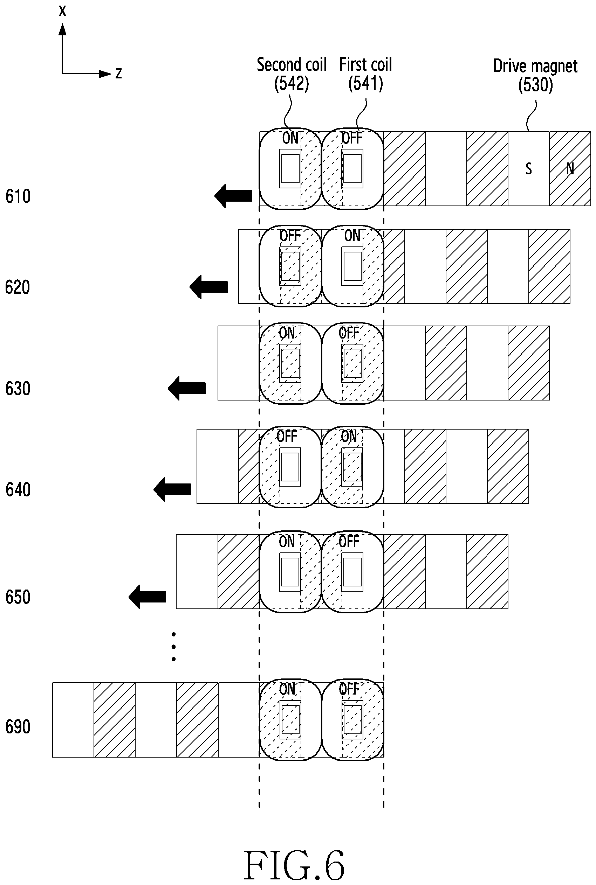

FIG. 6 illustrates the movement of a drive magnet 530 according to the control of a first coil 541 or a second coil 542 according to an embodiment.

FIG. 6 schematically illustrates the movement of the drive magnet 530 relative to the first coil 541 and the second coil 542 in a state of removing the lens assembly 510, the lens carrier 520, the first Hall sensor 551, and the second Hall sensor 552 illustrated in FIG. 5. In an embodiment, the drive magnet 530 may be a magnet in which N-poles and S-poles are alternately arranged four times. In an embodiment, since the first coil 541 and the second coil 542 are fixed to the housing 260, as the control circuit controls the first current applied to the first coil 541 and the second current applied to the second coil 542, the drive magnet 530 may move along the first optical axis (e.g., the +z-axis direction or -z-axis direction). Since the drive magnet 530 is coupled to the lens assembly 510, the control circuit may control the movement of the lens assembly 510 through the movement of the drive magnet 530, and thus may implement the AF function and/or the optical zoom function of the camera module 200 through the movement of the lens assembly 510.

According to an embodiment, at the position of reference number 610, the control circuit may control the first current applied to the first coil 541 to be OFF and the second current applied to the second coil 542 to be ON. For example, the second current applied to the second coil 542 may be a current in the clockwise direction. The magnetic field of the drive magnet 530 may interact with the electric field caused by the second current applied to the second coil 542, and thus the drive magnet 530 may move in the -z-axis direction by a predetermined distance. For example, the drive magnet 530 may move in the -z-axis direction by 1 mm.

According to an embodiment, at the position of reference number 620, the control circuit may control the first current applied to the first coil 541 to be ON and the second current applied to the second coil 542 to be OFF. For example, the first current applied to the first coil 541 may be a current in the clockwise direction. The magnetic field of the drive magnet 530 may interact with the electric field caused by the first current applied to the first coil 541, and thus the drive magnet 530 may move in the -z-axis direction by a predetermined distance. For example, drive magnet 530 may move in the -z-axis direction by 1 mm.

According to an embodiment, at the position of reference number 630, the control circuit may control the first current applied to the first coil 541 to be OFF and the second current applied to the second coil 542 to be ON. For example, the second current applied to the second coil 542 may be a current in the counterclockwise direction. The magnetic field of the drive magnet 530 may interact with the electric field caused by the second current applied to the second coil 542, and thus the drive magnet 530 may move in the -z-axis direction by a predetermined distance. For example, drive magnet 530 may move in the -z-axis direction by 1 mm.

According to an embodiment, at the position of reference number 640, the control circuit may control the first current applied to the first coil 541 to be ON and the second current applied to the second coil 542 to be OFF. For example, the first current applied to the first coil 541 may be a current in the counterclockwise direction. The magnetic field of the drive magnet 530 may interact with the electric field caused by the first current applied to the first coil 541, and thus the drive magnet 530 may move in the -z-axis direction by a predetermined distance. For example, drive magnet 530 may move in the -z-axis direction by 1 mm.

According to an embodiment, at the position of reference number 650, the control circuit may operate in the same way as in the case of reference number 610. Operations described in connection with reference numeral 610 to reference numeral 640 may be repeated until being reached at the position of reference numeral 690.

According to an embodiment, at the position of reference number 690, the control circuit may perform the operation described in connection with reference number 630. The drive magnet 530 may be moved in the -z-axis direction by a predetermined distance by the second current in the counterclockwise direction, which is applied to the second coil 542. In an embodiment, at the position of reference number 690, in case that the second current is controlled so that the drive magnet is further moved in the -z-axis direction by a predetermined distance, the drive magnet 530 may no longer move in the -z-axis direction. In order to move the drive magnet 530 in the +z-axis direction, among the contents described in connection with reference numeral 610 to reference numeral 640, the control circuit may apply currents to the coils, respectively, in directions opposite to the direction of the first current applied to the first coil 541 or the direction of the second current applied to the second coil 542, and thus may control the drive magnet 530 to move in the +z-axis direction.

According to an embodiment, the control circuit may alternately turn ON/OFF the first current applied to the first coil 541 and the second current applied to the second coil 542. According to another embodiment, the control circuit may alternately adjust the intensity of the first current and the second current to be strong/weak without turning ON/OFF the first current and the second current.

According to an embodiment, referring to contents described in relation to FIG. 6, the camera module 200 may have a long stroke of about 10 mm or more. The electronic device 100 including the camera module 200 may obtain an image through an optical zoom function. An optically zoomed image may have a continuous focal length and may not have reduced resolution, compared to a digitally zoomed image.

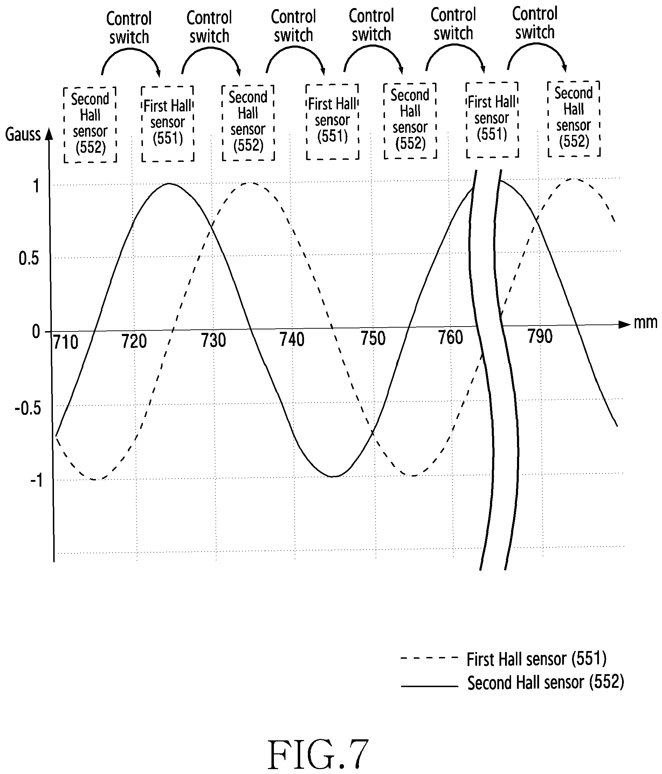

FIG. 7 is a graph showing signal values detected by a first Hall sensor 551 and a second Hall sensor 552 according to an embodiment.

According to an embodiment, the control circuit may detect the position of the drive magnet 530 through the first Hall sensor 551 and the second Hall sensor 552. According to an embodiment, the control circuit may control the movement of the lens assembly 510, based on a result value of the first Hall sensor 551 or a result value of the second Hall sensor 552. For example, the control circuit may control the movement of the lens assembly 510 by alternately using the result values of the first Hall sensor 551 and the second Hall sensor 552. For example, the control circuit may obtain a position value of the drive magnet 530 through a signal value detected by the first Hall sensor 551 or a signal value detected by the second Hall sensor 552, and thus may switch the control thereof in order to alternately use the signal value detected by the second Hall sensor 552 or the signal value detected by the first Hall sensor 551.

According to an embodiment, in the position from reference number 710 to reference number 720, the signal value detected by the second Hall sensor 552 is indicated to be close to a straight line, and in the position from reference number 720 to reference number 730, the signal value detected by the first Hall sensor 551 is indicated to be close to a straight line.

According to an embodiment, as the signal values detected by the Hall sensors are indicated to be closer to a straight line, the signal values detected by the Hall sensors and the position value of the drive magnet 530 may change more linearly. As the signal values detected by the Hall sensors and the position value of the drive magnet 530 change proportionally, it may be easier for the control circuit to control the movement of the drive magnet 530. Accordingly, the control circuit may calculate a position value of the drive magnet 530 by using the signal value detected by the second Hall sensor 552, at the positions of reference numeral 710 to reference numeral720, and may calculate a position value of the drive magnet 530 by using the signal value detected by the first Hall sensor 551, at the positions of reference numeral 720 to reference numeral 730. The control circuit may switch the control in order to use the signal values detected by different Hall sensors, at the positions of reference numeral 710 to reference numeral 720 and at the positions of reference numeral 720 to reference numeral 730. The control circuit may turn off power of the second Hall sensor 552 in case that power of the first Hall sensor 551 is turned on, and may turn off power of the first Hall sensor 551 in case that power of the second Hall sensor 552 is turned on. The control circuit may detect the position of the lens assembly 510 by alternately using result values of the first Hall sensor 551 and the second Hall sensor 552.

According to an embodiment, the position of reference number 710 may correspond to the position of reference number 610 illustrated in FIG. 6. The position of reference number 720 may correspond to the position of 620 in FIG. 6, the position of reference number 730 may correspond to the position of 630 in FIG. 6, the position of reference number 740 may correspond to the position of 640 in FIG. 6, the position of reference number 750 may correspond to the position of 650 in FIG. 6, and the position of reference number 790 may correspond to the position of 690 in FIG. 6.

According to an embodiment, the control circuit may control the second current applied to the second coil 542 so as to control the movement of the drive magnet 530, at the positions of reference numeral 610 to reference numeral 620 illustrated in FIG. 6, and may calculate a position value of the drive magnet 530 by using the signal value detected by the second Hall sensor 552, at the positions of reference numeral 710 to reference numeral 720 corresponding to the positions of reference numeral 610 to reference numeral 620 in FIG. 6. The above configuration may also be applied to reference numeral 720 to reference numeral 790. In an embodiment, the control circuit may calculate a position value of the drive magnet 530 by alternately using Hall sensors of which detection signal values are indicated to be close to a straight line.

According to an embodiment, the processor included in the electronic device 100 may obtain image data obtained through the image sensor 280, and may determine that the position of the lens assembly 510 needs to be moved to a specific position by analyzing the image data. In another embodiment, according to a user input in the electronic device 100, the processor may determine that the lens assembly 510 needs to be moved. In case that it is determined that the movement of the lens assembly 510 is necessary, the processor may provide a signal for moving the lens assembly 510 to the control circuit included in the camera module 200. The control circuit may control the first current applied to the first coil 541 and the second current applied to the second coil 542 so as to control the movement of the lens assembly 510, in order to move the lens assembly 510 to a specific position. In an embodiment, the control circuit may calculate a position value of the drive magnet 530 by alternately using the result value of the first Hall sensor 551 and the result value of the second Hall sensor 552. The control circuit may determine whether the lens assembly 510 has been moved to a specific position, through the position value of the drive magnet 530. In an embodiment, in case that it is determined that the lens assembly 510 has not been moved to a specific position, the control circuit may newly control the first current and the second current. The control circuit may control the first current and the second current so as to control the movement of the lens assembly 510, and thus may move the lens assembly 510 to a specific position.

FIG. 8 illustrates the form of a first coil 541 and a second coil 542 according to an embodiment.

According to an embodiment, the length of the N-pole or the S-pole of the drive magnet 530 may be d, and the distance between the centers of the two N-poles may be 2d.

According to an embodiment, the distance between the center of the first coil 541 and the center of the second coil 542 may be (3/2)d. The distance between the N-poles of the drive magnet 530 may have a ratio of 4/3 with respect to a distance between the center of the first coil 541 and the center of the second coil 542. In case that the distance between the N-poles of the drive magnet 530 has a ratio of 4/3 with respect to a distance between the center of the first coil 541 and the center of the second coil 542, the camera module 200 may continuously perform the operations described in relation to FIG. 6 to FIG. 7.

According to an embodiment, the distance between the center of the first coil 541 and the center of the second coil 542 may be (7/2)d. The distance between the N-poles of the drive magnet 530 may have a ratio of 4/7 with respect to a distance between the center of the first coil 541 and the center of the second coil 542. In an embodiment, in connection with the ratio between the distance between the N-poles of the drive magnet 530 and the distance between the center of the first coil 541 and the center of the second coil 542, all positions, which enable the camera module 200 to continuously perform the operations described in relation to FIG. 6 to FIG. 7, may be included therein. For example, the distance between the N-poles of the drive magnet 530 and the distance between the center of the first coil 541 and the center of the second coil 542 may have a ratio of 4/3, 4/7, 4/11, or 4/15.

According to an embodiment, the width of the coil inner hole and the coil winding width of each of the first coil 541 and the second coil 542 may be one (1). The width of the coil inner hole and the coil winding width of each of the first coil 541 and the second coil 542 may have a ratio of 1 : 1. In this case, the one (1) may correspond to (1/2)d.

In an embodiment, the distance between the N-poles of the drive magnet 530 may have a ratio of 4/1 with respect to the width of the coil inner hole and the coil winding width of each of the first coil 541 and the second coil 542 is 4/1. The length d of the N-pole or the S-pole of the drive magnet 530 may be two times of the one (1) which is the width of the coil inner hole and the coil winding width of each of the first coil 541 and the second coil 542. As the control circuit controls the first current and the second current, the drive force for controlling the movement of the drive magnet 530 may be maximum in case that the d is two times of the one (1).

According to an embodiment, the coil winding width of each of the first coil 541 and the second coil 542 may be n, and the width of the coil inner hole of each of the first coil 541 and the second coil 542 may be m. The width of the coil inner hole and the coil winding width of each of the first coil 541 and the second coil 542 may not have a ratio of 1 : 1. The first coil 541 and the second coil 542 may be coils, each of which the center-to-center distance (e.g., m + n) matches the length (e.g., d) of the N-pole or the S-pole of the drive magnet 530. Since the drive force thereof is maximized at the point at which the center of the coil winding width of each of the coils and the center of each of the poles of the drive magnet 530 meet, all coils, in which the m + n and the d match, may be possible. For example, even in case that the width of the coil inner hole and the coil winding width of each of the first coil 541 and the second coil 542 do not have a ratio of 1 : 1, the first coil and the second coil may be coils each of which the coil winding width is smaller, or each of which the coil winding width is greater. In an embodiment, the first coil 541 and the second coil 542 may be coils having the same form, and in another embodiment, the first coil 541 and the second coil 542 may be coils having different forms.

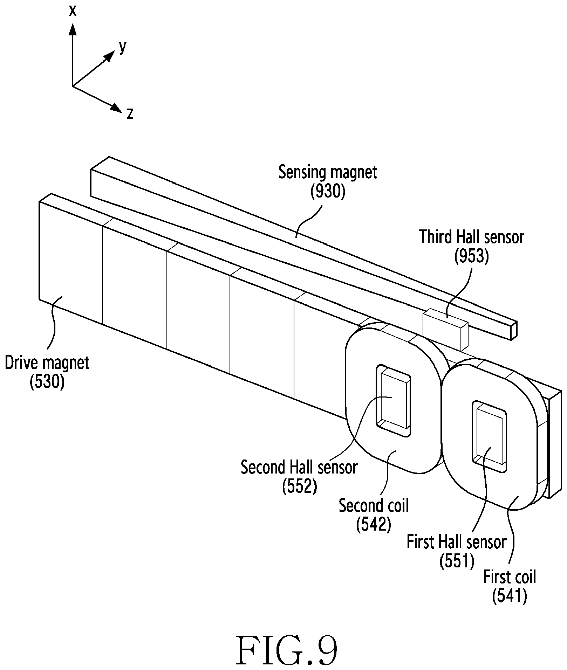

FIG. 9 illustrates a part of a camera module 200 including a sensing magnet 930 according to an embodiment.

According to an embodiment, the camera module 200 may include a sensing magnet 930 of which the volume changes along the first optical axis 501. In an embodiment, the first optical axis 501 illustrated in FIG. 5 may be understood as the z-axis illustrated in FIG. 9. For example, the camera module 200 may include the sensing magnet 930 of which the volume changes along the z-axis. For example, the sensing magnet 930 may have a length in the y-axis direction, which changes according to the position in the z-axis direction. In an embodiment, the sensing magnet 930 may be coupled to the lens assembly 510 together with the drive magnet 530, and may move integrally with the lens assembly 510. For example, the sensing magnet 930 may move in the +z-axis direction or the -z-axis direction together with the lens assembly 510.

According to an embodiment, the camera module 200 may include a third Hall sensor 953 facing the sensing magnet 930. The third Hall sensor 953 may be fixed to the housing 260 together with the first Hall sensor 551 and the second Hall sensor 552.

According to an embodiment, since the volume of the sensing magnet 930 changes along the first optical axis 501, as the sensing magnet 930 moves in the +z-axis direction or the -z-axis direction, the magnetic field intensity of the sensing magnet 930, which can be detected by the third Hall sensor 953, may change. The signal value detected by the third Hall sensor 953 may change according to the movement of the lens assembly 510. The control circuit may detect the position of the sensing magnet 930 through the third Hall sensor 953. The camera module 200 may obtain a position value of the lens assembly 510 through a signal value detected by the third Hall sensor 953.

According to an embodiment, in case that the camera module 200 controls the movement of the lens assembly 510 through the drive magnet 530, the first coil 541, the second coil 542, the first Hall sensor 551, and the second Hall sensor 552, it may be difficult to detect the exact position of the drive magnet 530 only through the signal values detected by the first Hall sensor 551 and the second Hall sensor 552. For example, the signal values detected by the first Hall sensor 551 and the second Hall sensor 552 may be identical at the position of reference number 610 and the position of reference number 650 in FIG. 6. The signal values detected by the first Hall sensor 551 and the second Hall sensor 552 may be substantially identical at the position of reference number 710 and the position of reference number 750 in FIG. 7. In order to solve the described problem, an operation of initializing the position of the drive magnet 530 may be added at the beginning of the photographing operation using the camera module 200. In an embodiment, in case of the camera module 200 further including the sensing magnet 930 and the third Hall sensor 953 together with the drive magnet 530, the first coil 541, the second coil 542, the first Hall sensor 551, and the second Hall sensor (552), an operation of initializing the position of the drive magnet 530 may be omitted. For example, the control circuit may obtain the position value of the sensing magnet 930 through the signal value detected by the third Hall sensor 953, and may determine the exact position value of the drive magnet 530 through the signal value detected by the first Hall sensor 551 or the second Hall sensor 552. For example, the control circuit may accurately detect the position of the lens assembly 510 by using the signal value detected by the third Hall sensor 953 and the signal values detected by the first Hall sensor 551 and the second Hall sensor 552 together.

According to an embodiment, in order to move the lens assembly 510 to a specific position, the control circuit may control the first current applied to the first coil 541 and the second current applied to the second coil 542 so that the lens assembly 510 moves to the specific position along the first optical axis 501, and may determine whether the lens assembly 510 has been moved to the specific position, through the signal values detected by the first Hall sensor 551, the second Hall sensor 552, and the third Hall sensor 953. In case that it is determined that the lens assembly 510 has not been moved to the specific position, the control circuit may control the first current and the second current so as to move the lens assembly 510 to the specific position.

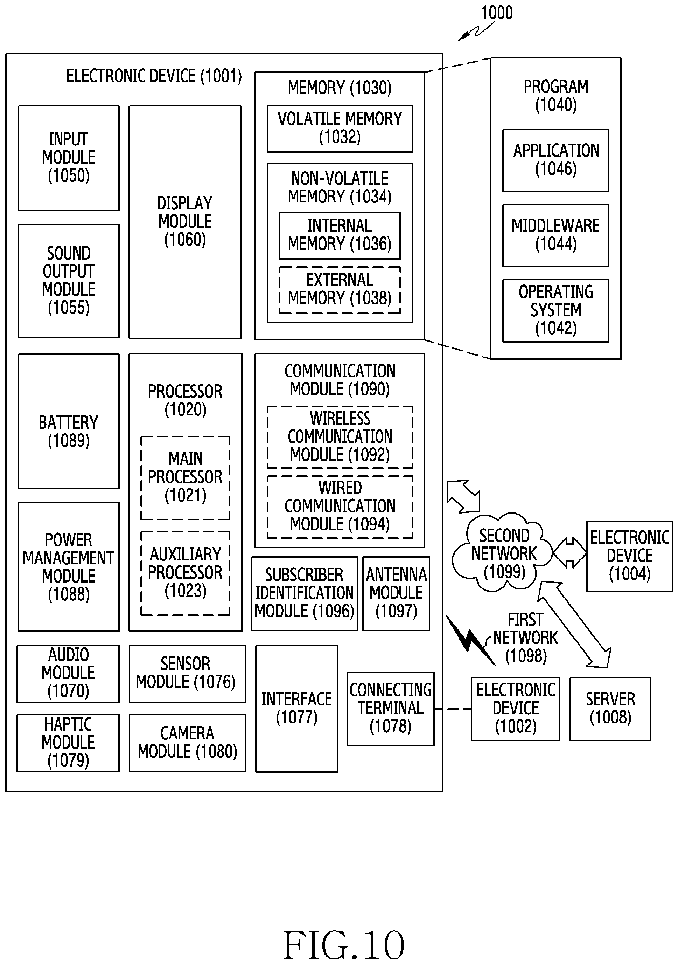

Fig. 10 is a block diagram illustrating an electronic device 1001 in a network environment 1000 according to various embodiments. Referring to Fig. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module(SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BluetoothTM, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Fig. 11 is a block diagram 1100 illustrating the camera module 1080 according to various embodiments. Referring to Fig. 11, the camera module 1080 may include a lens assembly 1110, a flash 1120, an image sensor 1130, an image stabilizer 1140, memory 1150 (e.g., buffer memory), or an image signal processor 1160. The lens assembly 1110 may collect light emitted or reflected from an object whose image is to be taken. The lens assembly 1110 may include one or more lenses. According to an embodiment, the camera module 1080 may include a plurality of lens assemblies 1110. In such a case, the camera module 1080 may form, for example, a dual camera, a 360-degree camera, or a spherical camera. Some of the plurality of lens assemblies 1110 may have the same lens attribute (e.g., view angle, focal length, auto-focusing, f number, or optical zoom), or at least one lens assembly may have one or more lens attributes different from those of another lens assembly. The lens assembly 1110 may include, for example, a wide-angle lens or a telephoto lens.

The flash 1120 may emit light that is used to reinforce light reflected from an object. According to an embodiment, the flash 1120 may include one or more light emitting diodes (LEDs) (e.g., a red-green-blue (RGB) LED, a white LED, an infrared (IR) LED, or an ultraviolet (UV) LED) or a xenon lamp. The image sensor 1130 may obtain an image corresponding to an object by converting light emitted or reflected from the object and transmitted via the lens assembly 1110 into an electrical signal. According to an embodiment, the image sensor 1130 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1130 may be implemented using, for example, a charged coupled device (CCD) sensor or a complementary metal oxide semiconductor (CMOS) sensor.

The image stabilizer 1140 may move the image sensor 1130 or at least one lens included in the lens assembly 1110 in a particular direction, or control an operational attribute (e.g., adjust the read-out timing) of the image sensor 1130 in response to the movement of the camera module 1080 or the electronic device 1001 including the camera module 1080. This allows compensating for at least part of a negative effect (e.g., image blurring) by the movement on an image being captured. According to an embodiment, the image stabilizer 1140 may sense such a movement by the camera module 1080 or the electronic device 1001 using a gyro sensor (not shown) or an acceleration sensor (not shown) disposed inside or outside the camera module 1080. According to an embodiment, the image stabilizer 1140 may be implemented, for example, as an optical image stabilizer. The memory 1150 may store, at least temporarily, at least part of an image obtained via the image sensor 1130 for a subsequent image processing task. For example, if image capturing is delayed due to shutter lag or multiple images are quickly captured, a raw image obtained (e.g., a Bayer-patterned image, a high-resolution image) may be stored in the memory 1150, and its corresponding copy image (e.g., a low-resolution image) may be previewed via the display module 1060. Thereafter, if a specified condition is met (e.g., by a user's input or system command), at least part of the raw image stored in the memory 1150 may be obtained and processed, for example, by the image signal processor 1160. According to an embodiment, the memory 1150 may be configured as at least part of the memory 1030 or as a separate memory that is operated independently from the memory 1030.

The image signal processor 1160 may perform one or more image processing with respect to an image obtained via the image sensor 1130 or an image stored in the memory 1150. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1160 may perform control (e.g., exposure time control or read-out timing control) with respect to at least one (e.g., the image sensor 1130) of the components included in the camera module 1080. An image processed by the image signal processor 1160 may be stored back in the memory 1150 for further processing, or may be provided to an external component (e.g., the memory 1030, the display module 1060, the electronic device 1002, the electronic device 1004, or the server 1008) outside the camera module 1080. According to an embodiment, the image signal processor 1160 may be configured as at least part of the processor 1020, or as a separate processor that is operated independently from the processor 1020. If the image signal processor 1160 is configured as a separate processor from the processor 1020, at least one image processed by the image signal processor 1160 may be displayed, by the processor 1020, via the display module 1060 as it is or after being further processed.

According to an embodiment, the electronic device 1001 may include a plurality of camera modules 1080 having different attributes or functions. In such a case, at least one of the plurality of camera modules 1080 may form, for example, a wide-angle camera and at least another of the plurality of camera modules 1080 may form a telephoto camera. Similarly, at least one of the plurality of camera modules 1080 may form, for example, a front camera and at least another of the plurality of camera modules 1080 may form a rear camera.

An electronic device according to an embodiment may include a lens assembly disposed along a first optical axis, a drive magnet which is coupled to the lens assembly and includes N-poles and S-poles alternately arranged along the first optical axis at least twice, a first coil and a second coil which face the drive magnet and are arranged side by side along the first optical axis, and a control circuit electrically connected to the first coil and the second coil. The control circuit may be configured to control a first current applied to the first coil and a second current applied to the second coil so that the lens assembly moves in the direction of the first optical axis with respect to the first coil and the second coil.

In the electronic device according to an embodiment, the distance between the N-poles of the drive magnet may have a designated ratio with respect to a distance between the center of the first coil and the center of the second coil.

In the electronic device according to an embodiment, the designated ratio may be 4/3.

In the electronic device according to an embodiment, a first Hall sensor surrounded by the first coil may be included therein, a second Hall sensor surrounded by the second coil may be included therein, and the control circuit may be configured to detect a position of the drive magnet through the first Hall sensor and the second Hall sensor.

In the electronic device according to an embodiment, the control circuit may be configured to control a movement of the lens assembly, based on a result value of the first Hall sensor or a result value of the second Hall sensor.

In the electronic device according to an embodiment, the distance between the N-poles of the drive magnet may have a ratio of 4/1 with respect to the width of a coil inner hole and the coil winding width of each of the first coil and the second coil.

The electronic device according to an embodiment may include a sensing magnet which is coupled to the drive magnet and of which the volume changes along the first optical axis and may further include a third Hall sensor facing the sensing magnet, and the control circuit may be configured to detect a position of the drive magnet through a result value of the third Hall sensor.

The electronic device according to an embodiment may include a prism facing the lens assembly, the prism may be configured to change light incident on a second optical axis perpendicular to the first optical axis to the first optical axis, through a camera hole of the electronic device, and the light changed to the first optical axis may be incident to the lens assembly.

In the electronic device according to an embodiment, the camera hole may be disposed on the rear surface of the electronic device, and a camera module including the lens assembly, the drive magnet, the first coil, the second coil, and the prism may be included in a rear camera of the electronic device.

In the electronic device according to an embodiment, at least a partial area of the rear surface of the electronic device, which includes the camera hole, may protrude more than the remaining areas of the rear surface of the electronic device.

In the electronic device according to an embodiment, the rear surface of the electronic device, which includes the camera hole, may be formed to have an even flat-surface without a protruding portion.

In the electronic device according to an embodiment, at least one processor electrically connected to the control circuit may be included therein, and the at least one processor may be configured to control a movement of the lens assembly through the control circuit.

A method for operating an electronic device according to an embodiment may include applying a first current to a first coil and applying a second current to a second coil by a control circuit included in the electronic device, the first coil and the second coil being arranged side by side along a first optical axis, and controlling such that a drive magnet including N-poles and S-poles, which face the first coil and the second coil and are alternately arranged along the first optical axis at least twice, moves in the direction of the first optical axis, and controlling such that a lens assembly coupled to the drive magnet and disposed along the first optical axis moves in the direction of the first optical axis, by the control circuit.

The method for operating an electronic device according to an embodiment may include detecting, by the control circuit, a position of the drive magnet through a first Hall sensor surrounded by the first coil and a second Hall sensor surrounded by the second coil.

The method for operating an electronic device according to an embodiment may include detecting, by the control circuit, a position of a sensing magnet which is coupled to the drive magnet and of which the volume changes along the first optical axis, through a third Hall sensor.

A camera module according to an embodiment of the document may include a lens assembly disposed along a first optical axis, a drive magnet which is coupled to the lens assembly and includes N-poles and S-poles alternately arranged along the first optical axis at least twice, and a first coil and a second coil which face the drive magnet and are arranged side by side along the first optical axis. The lens assembly may move along the first optical axis according to a current applied to the first coil and the second coil, and the distance between the N-poles of the drive magnet may have a designated ratio with respect to a distance between the center of the first coil and the center of the second coil.

In the camera module according to an embodiment of the document, the designated ratio may be 4/3.

The camera module according to an embodiment of the document may include a first Hall sensor surrounded by the first coil and a second Hall sensor surrounded by the second coil.

The camera module according to an embodiment of the document may include a sensing magnet coupled to the drive magnet and of which the volume changes along the first optical axis, and may further include a third Hall sensor facing the sensing magnet.

The camera module according to an embodiment of the document may include a prism facing the lens assembly, the prism may be configured to change light incident on a second optical axis perpendicular to the first optical axis to the first optical axis, and the light changed to the first optical axis may be incident to the lens assembly.

## Claims

1. An electronic device comprising:
a lens assembly disposed along a first optical axis;
a drive magnet which is coupled to the lens assembly and comprises N-poles and S-poles alternately arranged along the first optical axis at least twice;
a first coil and a second coil which face the drive magnet and are arranged side by side along the first optical axis; and
a control circuit electrically connected to the first coil and the second coil,
wherein the control circuit is configured to control a first current applied to the first coil and a second current applied to the second coil so that the lens assembly moves in the direction of the first optical axis with respect to the first coil and the second coil.

2. The electronic device of claim 1, wherein the distance between the N-poles of the drive magnet has a designated ratio with respect to a distance between the center of the first coil and the center of the second coil.

3. The electronic device of claim 2, wherein the designated ratio is 4/3.

4. The electronic device of claim 2 or 3, comprising:
a first Hall sensor surrounded by the first coil, and
a second Hall sensor surrounded by the second coil,
wherein the control circuit is configured to detect a position of the drive magnet through the first Hall sensor and the second Hall sensor.

5. The electronic device of claim 4, wherein the control circuit is configured to control a movement of the lens assembly, based on a result value of the first Hall sensor or a result value of the second Hall sensor.

6. The electronic device of claim 4 or 5, comprising a sensing magnet which is coupled to the drive magnet and of which the volume changes along the first optical axis and
further comprising a third Hall sensor facing the sensing magnet,
wherein the control circuit is configured to detect a position of the drive magnet through a result value of the third Hall sensor.

7. The electronic device of any of the preceding claims, wherein the distance between the N-poles of the drive magnet has a ratio of 1/4 with respect to the width of a coil inner hole and the coil winding width of each of the first coil and the second coil.

8. The electronic device of any of the preceding claims, comprising a prism facing the lens assembly,
wherein the prism is configured to change light incident on a second optical axis perpendicular to the first optical axis to the first optical axis, through a camera hole of the electronic device, and
wherein the light changed to the first optical axis is incident to the lens assembly.

9. The electronic device of claim 8, wherein the camera hole is disposed on the rear surface of the electronic device, and
wherein a camera module comprising the lens assembly, the drive magnet, the first coil, the second coil, and the prism is included in a rear camera of the electronic device.

10. The electronic device of claim 8 or 9, wherein at least a partial area of the rear surface of the electronic device, which comprises the camera hole, protrudes more than the remaining areas of the rear surface of the electronic device.

11. The electronic device of any of the claims 8-10, wherein the rear surface of the electronic device, which comprises the camera hole, is formed to have an even flat-surface without a protruding portion.

12. The electronic device of any of the preceding claims, comprising at least one processor electrically connected to the control circuit,
wherein the at least one processor is configured to control a movement of the lens assembly through the control circuit.

13. An operation method of an electronic device, comprising:
applying a first current to a first coil and applying a second current to a second coil by a control circuit included in the electronic device, the first coil and the second coil being arranged side by side along a first optical axis; and
controlling the electronic device such that a drive magnet including N-poles and S-poles, which face the first coil and the second coil and are alternately arranged along the first optical axis at least twice, moves in the direction of the first optical axis, and controlling the electronic device such that a lens assembly coupled to the drive magnet and disposed along the first optical axis moves in the direction of the first optical axis, by the control circuit.

14. The operation method of claim 13, comprising detecting, by the control circuit, a position of the drive magnet through a first Hall sensor surrounded by the first coil and a second Hall sensor surrounded by the second coil.

15. The operation method of claim 14, comprising detecting, by the control circuit, a position of a sensing magnet which is coupled to the drive magnet and of which the volume changes along the first optical axis, through a third Hall sensor.
